# NEUE EUROPÄISCHE PATENTSCHRIFT

(11) **EP 0 540 464 B2**
(45) Veröffentlichungstag und Bekanntmachung des Hinweises auf die Entscheidung über den Einspruch: **15.12.2004**
(45) Hinweis auf die Patenterteilung: 27.12.1996
(21) Anmeldenummer: 92810781.2
(22) Anmeldetag: 13.10.1992
(51) Int. Cl.: B07C 3/08

(54) **Anlage zur Sortieren von Stückgütern**
Piece-good sorting apparatus
Dispositif de triage de pièces détachées

(30) Priorität: 29.10.1991 CH 316791
(43) Veröffentlichungstag der Anmeldung: 05.05.1993
(73) Patentinhaber: SIEMENS AKTIENGESELLSCHAFT, 80333 München (DE)
(72) Erfinder: Killer, Viktor, CH-8616 Riedikon (CH); Maier, Willy, CH-8302 Kloten (CH)
(74) Vertreter: Fischer, Michael, Dr.

(56) Entgegenhaltungen:
- EP-A- 0 339 337
- WO-A-89/03796
- DE-A- 2 658 517
- FR-A- 2 373 464
- US-A- 3 167 192
- US-A- 3 300 026

## Beschreibung

Im DE-Patent 30 50 102 ist eine Sortieranlage beschrieben: Auf einer zu einer Schleife geschlossenen Schiene läuft eine endlose Wagenkette um. Jeder Wagen dieser Wagenkette hat eine Schale, die um eine geneigte Achse aus einer horizontalen Grundstellung in zwei Kippstellungen schwenkbar ist. Längs der Schleife sind mehrere Beschickungsstationen vorhanden, an welchen die Schalen mit Stückgütern beschickt werden, und mehrere Zielstationen. An der Beschickungsstation wird dem mit dem Stückgut beschickten Wagen eine der Zielstationen zugeordnet. Wenn er bei dieser anlangt, wird dort eine horizontale Schiene quer verschoben, so dass sie auf den Aussenumfang einer am Wagen drehbar gelagerten Scheibe drückt. Dadurch wird diese gedreht und schwenkt die Schale in eine ihrer beiden Kippstellungen, so dass das Stückgut an dieser Zielstation abgeladen wird.

Diese Anlage hat sich sehr bewährt, vor allem bei Anwendungen, wo die Stückgutgrösse relativ wenig schwankt. Bei stark unterschiedlichen Stückgutgrössen ergeben sich allerdings Schwierigkeiten mit der Treffsicherheit bei den Zielstationen, weil die um geneigte Achsen kippenden Schalen die Stückgüter je nach Schwerpunktlage unterschiedlich zur Seite beschleunigen. Bei stark unterschiedlichen Stückgutgrössen muss deshalb die Umlaufgeschwindigkeit der Wagenkette reduziert werden, was die Kapazität der Anlage beschränkt.

Aus der FR-A-2 373 464 ist eine Sortieranlage für Stückgüter bekannt, bei welcher jeder Wagen zwei um eine in Fahrtrichtung verlaufende Achse schwenkbar Schalen hat, die an den Zielstationen individuell gekippt werden können. Dazu trägt jede Schale einen nach unten abstehenden Schwenkarm mit einer Rolle, die in einer Schiene geführt ist. Bei jeder Zielstation ist in der Schiene eine Weiche angeordnet, um die Rolle auf Kommando seitlich auszulenken und damit die betreffende Schale zu kippen.

Der vorliegenden Erfindung liegt die Aufgabe zugrunde, eine Sortieranlage und Transportwagen für eine solche Anlage derart auszubilden, dass sie auch stark unterschiedlich grosse Stückgüter rationell sortieren kann. Diese Aufgabe wird durch die Merkmalskombination gemäss Anspruch 1 bzw. 4 gelöst.

Nachfolgend wird ein Ausführungsbeispiel der Erfindung anhand der Zeichnung erläutert. Darin zeigt:
- Fig. 1: einen vereinfachten Grundriss einer Anlage,
- Fig. 2: eine Seitenansicht eines Teils der Anlage,
- Fig. 3: einen vergrösserten Ausschnitt der Ansicht nach Fig. 2,
- Fig. 4: eine Stirnansicht eines Wagens,
- Fig. 5 und 6: Schnitte längs den Linien V-V bzw. VI-VI in Fig. 3,
- Fig. 7: eine Stirnansicht einer anderen Ausführung des Fahrwerkes, und
- Fig. 8: eine Ansicht von unten auf das Fahrwerk nach Fig. 7.

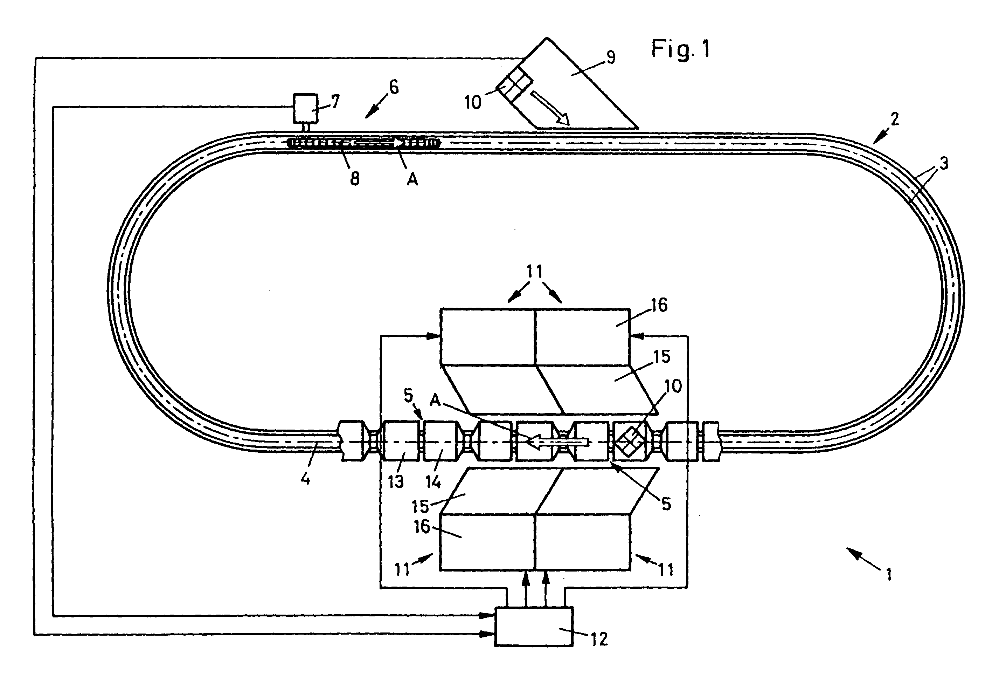

Die Anlage 1 nach Fig. 1 ist z.B. geeignet zum Sortieren von Postsendungen in Postverteilungszentren. Sie umfasst eine zu einer Schleife 2 geschlossene Schiene 3 und eine endlose Wagenkette 4 bestehend aus miteinander gekoppelten, auf der Schiene 3 geführten Wagen 5. Ein Antrieb 6 bestehend aus einem Antriebsmotor 7 und einer Antriebskette 8 treibt die Wagen 4 in Fahrtrichtung A. Längs der Schleife 2 sind mehrere Beschickungsstationen 9 angeordnet, an welchen Pakete 10 auf die Wagenkette 4 aufgeladen werden, wobei jedem beschickten Wagen 5 eine von mehreren Zielstationen 11 zugeordnet wird. Eine Steuereinrichtung 12 kippt an der adressierten Zielstation 11 eine Schale 13, 14 oder beide Schalen 13, 14 des beladenen Wagens 5 um eine in Wagenlängsrichtung verlaufende Achse. Dadurch rutscht das Paket 10 von der Schale 13, 14 auf eine geneigte Rutsche 15 der Zielstation 11 und darauf in einen Schacht 16 und z.B. in einen darunter aufgestellten Sammelbehälter. Sowohl die Beschickungsstationen 9 als auch die Zielstationen 11 sind in Umlaufrichtung A länger als die Summe der Längen der beiden Schalen 13, 14 eines Wagens 5. Dadurch können lange Pakete auf beide Schalen 13, 14 eines Wagens aufgeladen und an der betreffenden Zielstation 11 durch gleichzeitiges Kippen beider Schalen 13, 14 abgeworfen werden. Kurze Pakete werden demgegenüber nur auf eine Einzelschale 13 oder 14 gelegt und an der Zielstation 11 dementsprechend nur diese Schale 13 bzw. 14 gekippt. Dadurch kann die andere Schale 14 bzw. 13 dieses Wagens 5 gleichzeitig ein anderes, kurzes Paket 10 zu einer anderen oder der gleichen Zielstation 11 transportieren. Durch die Aufteilung der Transportorgane in zwei Schalen 13, 14 pro Wagen wird die Soriterkapazität der Anlage 1 nahezu verdoppelt, falls grosse Pakete 10, die beide Schalen 13, 14 belegen, relativ selten vorkommen. Weil die beiden Schalen 13, 14, die gemeinsam ein grosses Paket aufnehmen können, auf einem gemeinsamen Fahrgestell montiert sind, treten zwischen ihnen in Kurven und beim Uebergang auf Steigungsstrecken keine Relativverschiebungen auf, so dass das grosse Paket sicher und ohne zu verrutschen transportiert wird.

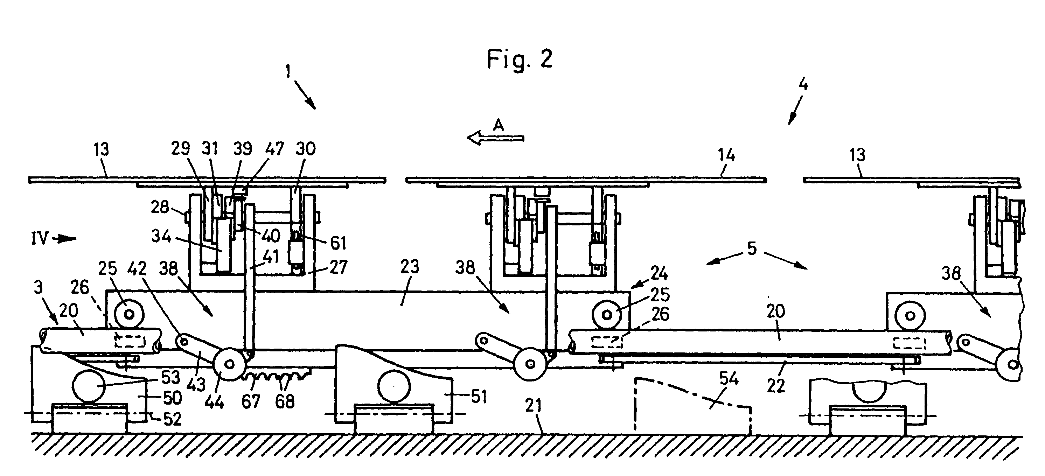

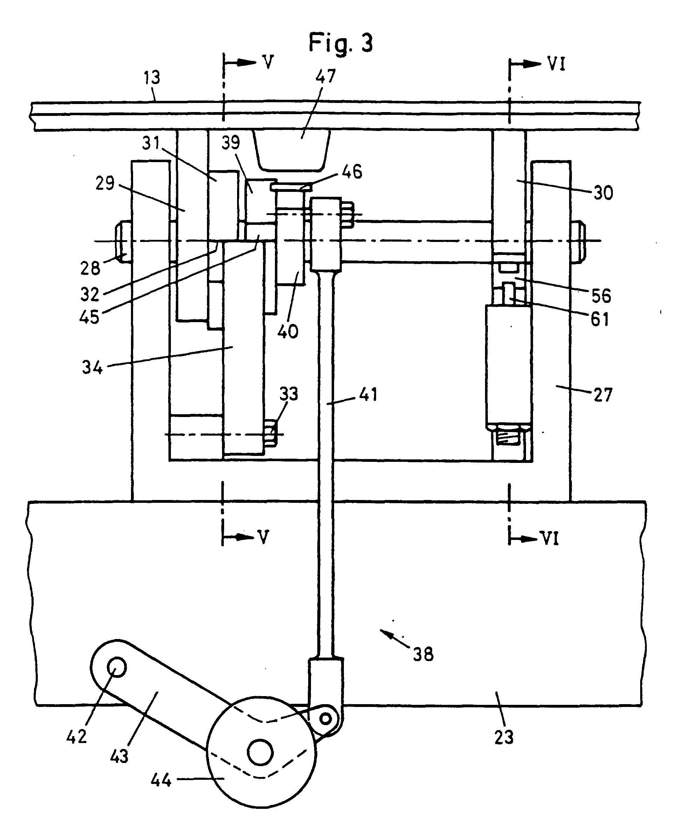

In Fig. 2 bis 6 ist ein Wagen 5 der Anlage 1 detaillierter dargestellt. Die Schiene 3 besteht aus zwei seitlich voneinander beabstandeten, parallelen Rohren 20, welche durch nicht dargestellte Träger auf einem Fundament 21 befestigt sind. Die Wagen 5 der Wagenkette 4 sind durch Gelenkstangen 22 mit sphärischen Gelenken miteinander gekoppelt. Sie bestehen aus einem Tragbalken 23 und einem daran befestigen Fahrwerk 24 aus Laufrollen 25 und Führungsrollen 26, die auf den Rohren 20 abrollen. Die Gelenkstangen 22 sind benachbart der Ebene der Führungsrollen 26 am Tragbalken 23 angelenkt, damit die Zug- und Stosskräfte der Gelenkstangen 22 zusammen mit den Seitenführungskräften nur geringe kippende Momente auf den Wagen 5 ergeben.

Auf dem Balken 23 sind zwei Schalenträger 27 festgeschraubt. Auf diesen Trägern 27 sind die Schalen 13, 14 um eine gemeinsame, horizontale, in Wagenlängsrichtung verlaufende Achse 28 mittels Lagerkörpern 29, 30 durch Nadellager schwenkbar gelagert. Am Lagerkörper 29 ist eine Verriegelungsscheibe 31 festgeschraubt. Die Scheibe 31 hat an ihrem Aussenumfang zwei radiale Schultern 32. In diese Schultern greifen in der in Fig. 2, 3 und 5 dargestellten Grundstellung der Schalen 13, 14 zwei um Achsen 33 parallel zur Achse 28 schwenkbare Sperrklinken 34 ein. Die Klinken 34 sind durch eine Feder 35 gegeneinander gespannt.

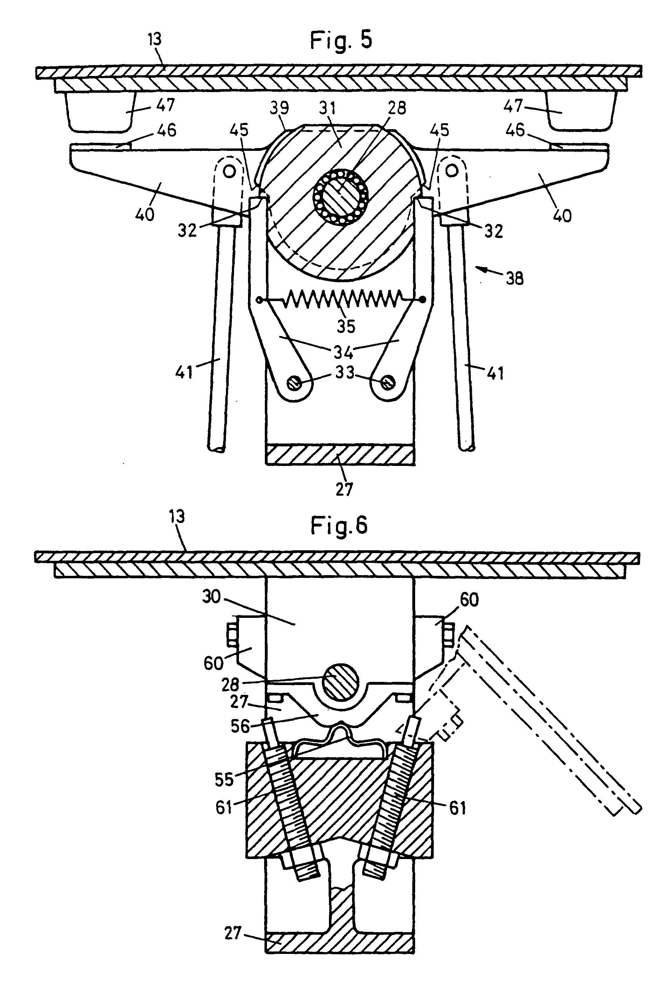

Jeder Schale 13, 14 ist ein Betätigungsorgan 38 zugeordnet. Es besteht aus einer Entriegelungsscheibe 39, die auf der Achse 28 mit weiteren Nadellagern schwenkbar gelagert ist, einem mit der Scheibe 39 verschraubten Betätigungshebel 40, zwei Schubstangen 41, je einem am Tragbalken 23 um eine Querachse 42 schwenkbar gelagerten Arm 43 und je einer am Arm 43 drehbar gelagerten Betätigungsrolle 44. Die Scheibe 39 hat zwei zur Achse 28 parallele, geneigte Flächen 45, welche beim Schwenken der Scheibe 39 eine der beiden Klinken 34 aus der in Fig. 5 dargestellten Sperrstellung anhebt und somit die Verriegelungsscheibe 31 entsperrt. Nach einem geringen Entsperrwinkel schlägt eine von zwei Scheiben 46 an den freien Enden des Hebels 40 gegen einen an der Schale 13, 14 befestigten Gummipuffer 47 und kippt diese Schale 13, 14.

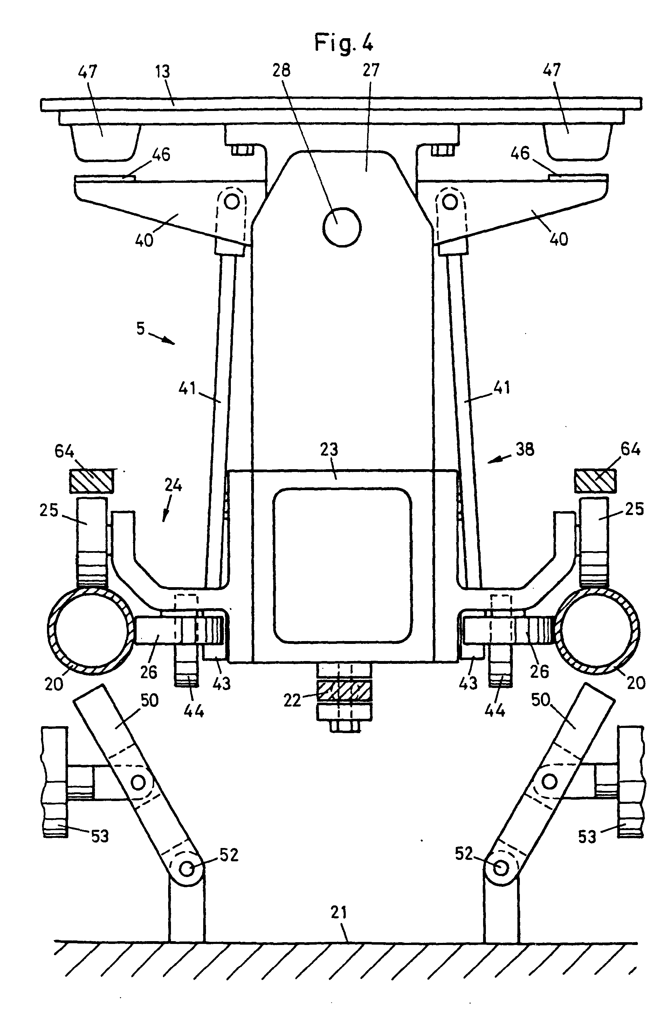

Zum Kippen der Schalen 13, 14 hat jede Zielstation 11 auf der dieser Station abgewandten Seite der Schiene 3 zwei Steuerkurven 50, 51, die um horizontale Achsen 52 gegenüber dem Fundament 21 mittels je eines Pneumatikzylinders 53 aus der in Fig. 4 dargestellten, geneigten, inaktiven Stellung in eine vertikale, aktive Stellung schwenkbar sind, in welcher die betreffende Rolle 44 auf der Steuerkurve 50, 51 aufläuft und den Hebel 40 mit der Entriegelungsscheibe 39 verschwenkt. Die beiden Steuerkurven 50, 51 einer Zielstation 11 haben denselben Abstand voneinander wie die beiden Betätigungsrollen 44 einer Seite der Wagen 5.

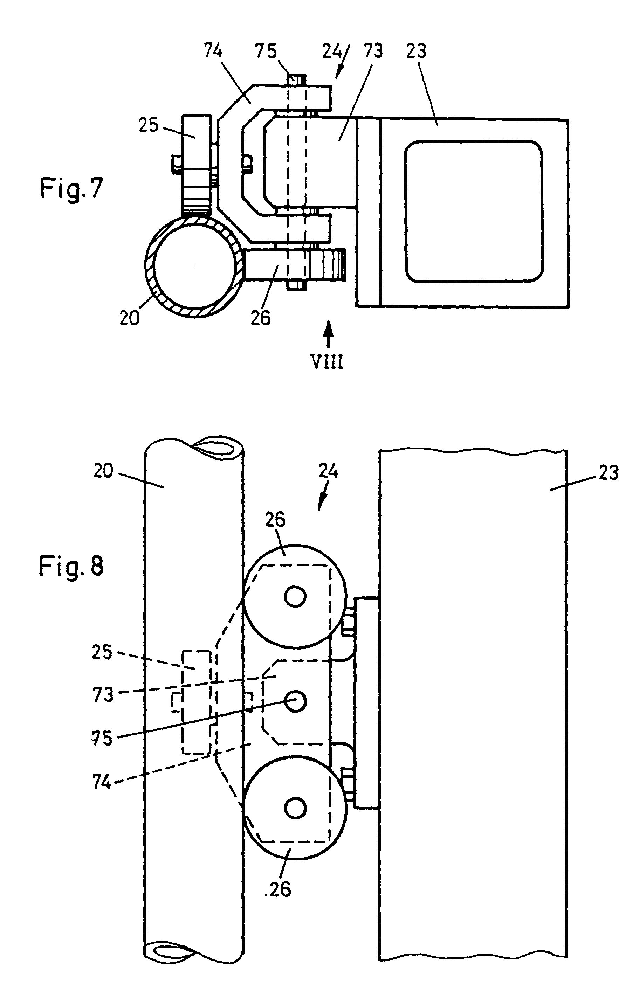

Jeweils vor Kurven und Steigungen sind Rückführkurven 54 auf dem Fundament 21 starr befestigt, welche jede vorbeifahrende, gekippte Schale 13, 14 wieder in die horizontale Grundstellung zurückführen. Die Rückführkurve 54 ist in Fig. 2 strichpunktiert dargestellt. Selbstverständlich ist sie in Wirklichkeit nicht unmittelbar nach einer Steuerkurve 50, 51 angeordnet. Die Rückführkurven 54 erfassen die jeweils abgesenkten Rollen 44 und heben sie an, so dass der Hebel 40 in seine Mittelstellung gebracht wird. Damit ist allerdings die betreffende Schale 13, 14 noch nicht in der Grundstellung, weil sie gegenüber dem Hebel 40 um den Entsperrwinkel schwenkbar ist. Die letzte Rückführung der Schale 13, 14 in die Grundstellung besorgt ein elastisches Rastglied 55, z.B. aus Polyamid, in welches eine Rastnase 56 des Lagerkörpers 29 einrastet (Fig. 6).

Zur Endlagendämpfung sind am Lagerkörper 30 zwei Anschlagkörper 60 befestigt, die gegen je einen am Träger 27 befestigten Stossdämpfer 61 anschlagen.

Damit die auf den Wagen 5 wirkenden dynamischen Kräfte diesen nicht kippen können, ist bei allen Zielstationen 11, in Kurven und in Steigungen oberhalb jedes Rohres 20 eine zusätzliche Führungsschiene 64 angebracht (Fig. 4).

Zum Antrieb der Wagenkette 4 ist bei jedem Wagen 5 an der Unterseite des Tragbalkens 23 mindestens eine Zahnstange 67 befestigt. Die Zähne 68 der Zahnstange 67 sind auf einem tieferen Niveau als die Gelenkstangen 22. Die Antriebskette 8 ist so lang, dass jeweils mindestens zwei Zahnstangen 67 benachbarter Wagen 5 gleichzeitig in sie eingreifen.

In Fig. 7 und 8 ist eine Variante des Fahrwerks 24 gezeigt, die sich vor allem für Wagen 5 mit grossem Achsabstand eignet. Um die Schrägstellung der Laufrollen 25 gegenüber den Rohren 20 und den damit verbundenen Verschleiss der Laufrollen in Kurven zu vermeiden, ist auf einem am Tragbalken 23 festgeschraubten Träger 73 ein Rollenhalter 74 um eine vertikale Achse 75 schwenkbar gelagert. Am Rollenhalter 74 sind zwei Führungsrollen 26 beidseits der Achse 75 gelagert. Durch diese beiden Führungsrollen 26 wird der Rollenhalter 74 und damit die Laufrolle 25 parallel zum Rohr 20 geführt, unabhängig von der Schrägstellung des Tragbalkens 23 in Kurven. Durch diese Ausbildung können die Wagen 25 lang gebaut werden, so dass im Bedarfsfall auch drei Schalen 13, 14 pro Wagen mit zugehörigen Betätigungsorganen 38 montiert werden können.

Bei langen Wagen kann es zweckmässig sein, die Betätigungsrollen 44 in regelmässigen Abständen vorzusehen. Dadurch ist die zum Einschwenken der Steuerkurven 50, 51 verfügbare Zeit für alle Rollen 44 gleich.

Mit der beschriebenen Anlage wird eine optimale Auslastung aller Schalen 13, 14 auch bei stark variierender Stückgutgrösse und damit ein rationeller Betrieb erreicht. Die formschlüssige Verriegelung der Schalen 13, 14 in ihrer Grundstellung ergibt einen sicheren Betrieb auch bei hoher Fördergeschwindigkeit. Sollte ein Verriegelungs- oder Betätigungsmechanismus defekt sein, wird die betreffende Schale 13, 14 durch die Steuereinrichtung 12 gesperrt und bei einem späteren Betriebsunterbruch der betreffende Schalenträger 27 gegen einen neuen ausgetauscht. Dieser Austausch kann rasch durchgeführt werden, weil die Wagenkette 4 nicht unterbrochen werden muss. Die beschriebene Anlage ist deshalb sehr wartungsfreundlich.

Auf identische Wagen 5 können je nach Anwendungsfall, d.h. je nach der maximal zu transportierenden Stückgutgrösse, auch kürzere oder längere Schalen 13, 14 montiert werden, wobei lediglich die Länge der Gelenkstangen 22 entsprechend anzupassen ist. Dadurch können die Wagen 5 in grossen Stückzahlen rationell gefertigt und die Lagerhaltung vereinfacht werden.

Falls die Zielstationen 11 alle auf der selben Seite der Schleife 2 sind, können die Betätigungsorgane 38 auf der einen Seite der Wagen 5 weggelassen werden. Die Rückführkurven 54 werden in diesem Fall so ausgebildet, dass sie die angehobenen Betätigungsrollen 44 nach unten ziehen.

Je nach Anwendungsfall kann es zweckmässig sein, die vorderen beiden Betätigungsrollen 44 der Wagen 5 auf einer anderen Spur zu führen als die hinteren beiden Betätigungsrollen 44, und dementsprechend die Steuerkurven 50, 51 jeder Zielstation 11 gegeneinander seitlich zu versetzen, wobei die Kurve 50, 51 mit dem geringeren Abstand von der Symetrieebene der Schiene 3 z.B. nach innen abgeklappt wird. Dadurch steht eine grössere Wegstrecke der Wagen 5 zum Verschwenken der Steuerkurven 50, 51 zwischen der aktiven und der inaktiven Stellung zur Verfügung, so dass die Transportgeschwindigkeit erhöht oder die Anforderung an die Präzision der Aktivierung der Steuerkurven gesenkt werden kann.

Betätigungsrollen 44 und Steuerkurven 50, 51 können auch gegeneinander vertauscht sein.

## Patentansprüche

1. Anlage zum Sortieren von Stückgütern (10) umfassend:
- eine zu einer Schleife (2) geschlossene Schiene (3);
- mehrere zu einer endlosen Wagenkette (4) miteinander gekoppelte, auf der Schiene (3) geführte Wagen (5), von denen jeder zwei um eine in Wagenlängsrichtung verlaufende Achse (28) schwenkbare, in Fahrtrichtung hintereinander angeordnete Schalen (13, 14) aufweist, die aus einer horizontalen Grundstellung, in welcher sie eine im wesentlichen durchgehende, gemeinsame Auflagefläche für die Stückgüter bilden, in eine Kippstellung schwenkbar sind, wobei jeder Wagen (5) zwei Betätigungsorgane (38) zum unabhängigen Schwenken der beiden Schalen (13, 14) zwischen den beiden Stellungen hat;
- einen Antrieb (6) zum Antreiben der Wagenkette (4) längs der Schiene (3);
- mindestens eine Beschickungsstation (9) längs der Schleife (2) zum Beschicken der Schalen (13, 14) mit Stückgütern (10);
- mehrere Zielstationen (11) längs der Schleife (2) zum Empfang der Stückgüter (10), wobei die Zielstationen (11) in Transportrichtung mindestens so lang sind wie die Summe der Längen der beiden Schalen (13, 14) eines Wagens (5);
- je zwei jeder Zielstation (11) zugeordnete Schaltorgane (50, 51), die einzeln zwischen einem inaktiven und einem aktiven Zustand schaltbar sind, wobei sie im aktiven Zustand bei einem vorbeifahrenden Wagen (5) eines der beiden Betätigungsorgane (38) betätigen, und wobei die Schaltorgane (50, 51) denselben Abstand voneinander haben wie die Betätigungsorgane (38) eines Wagens (5).
- eine Steuereinrichtung (12), über welche jedem an der Beschickungsstation (9) auf die Wagen (5) aufgegebenen Stückgut eine der Zielstationen (11) zugeordnet wird, wobei die beiden Schaltorgane (50, 51) jeder Zielstation (11) durch die Steuereinrichtung (12) getrennt derart ansteuerbar sind, dass beim Durchfahren eines einzelnen Wagens (5) entweder die beiden Schaltorgane (50, 51) dieser Zielstation (11) gleichzeitig oder nur ein ausgewähltes von ihnen oder keines in den aktiven Zustand schaltet, so dass beide Schalen (13, 14) eines Wagens (5) gleichzeitig, nur eine von ihnen oder keine bei dieser Zielstation (11) kippen; und
- mindestens ein Rückführorgan (54) längs der Schleife (2) zum Rückführen der gekippten Schalen (13, 14) in die Grundstellung.

2. Anlage nach Anspruch 1, wobei die beiden Betätigungsorgane (38) jedes Wagens (5) und die beiden Schaltorgane (50, 51) jeder Zielstation (11) zusammenwirkende Betätigungsrollen (44) und Steuerkurven (50, 51) umfassen, die gleichen Abstand voneinander haben.

3. Anlage nach Anspruch 1 oder 2, wobei die beiden Betätigungsorgane (38) jedes Wagens einen unterschiedlichen Abstand von der vertikalen Wagenlängsmittelebene und die beiden Schaltorgane (50, 51) jeder Zielstation (11) im aktiven Zustand denselben unterschiedlichen Abstand von der vertikalen Symmetrieebene der Schiene (3) haben.

4. Transportwagen zur Verwendung in einer Sortieranlage nach Anspruch 1, umfassend:
- ein Fahrgestell (23, 24) mit Laufrollen (25) und Seitenführungsrollen (26) zum Befahren einer Schiene (3) der Anlage (1);
- beidseitig je ein Kupplungsorgan (22) am Fahrgestell (23, 24) zum Verbinden des Wagens (5) durch je eine Gelenkstange (22) mit benachbarten Wagen zu einer Wagenkette (4);
- zwei um eine in Wagenlängsrichtung verlaufende Achse (28) auf dem Fahrgestell (23. 24) einzeln schwenkbar gelagerte, in Wagenlängsrichtung hintereinander angeordnete Schalen (13, 14), die aus einer horizontalen Grundstellung, in welcher sie eine im wesentlichen durchgehende, gemeinsame Auflagefläche für die Stückgüter bilden, in eine Kippstellung schwenkbar sind; und
- zwei Betätigungsorgane (38) zum unabhängigen Schwenken der beiden Schalen (13, 14) zwischen den beiden Stellungen.

5. Wagen nach Anspruch 4, wobei jede Schale (13, 14) in ihrer Grundstellung durch je eine federbelastete Klinke (34) verriegelt ist, die bei der ersten Bewegung des zugehörigen Betätigungsorgans (38) entriegelt wird, und wobei jede Schale (13, 14) in der Grundstellung zusätzlich durch ein federndes Rastglied (55) relativ zum Fahrgestell (23, 24) zentriert ist.

6. Wagen nach Anspruch 5, wobei jedes Betätigungsorgan (38) einen um die Schwenkachse (28) der Schalen (13,14) schwenkbaren Hebel (40) umfasst, der über eine Schubstange (41) mit einem Betätigungselement (43) verbunden ist, wobei der Hebel (40) eine Schrägfläche (45) zum Anheben der zugehörigen Klinke (34) und an seinem freien Ende einen Mitnehmer (46) zum Verschwenken der zugehörigen Schale (13,14) aufweist, und wobei der Mitnehmer (46) von der entsprechenden Gegenfläche (47) der Schale (13,14) in deren Grundstellung Abstand hat.

7. Wagen nach Anspruch 6, wobei die Klinke (34) in der Grundstellung der zugehörigen Schale (13,14) in eine Verriegelungskerbe (32) an einer zylindrischen Aussenfläche einer mit dieser Schale (13,14) verbundenen Scheibe (31) eingreift und die Klinke (34) um eine zur Schwenkachse (28) der Schale (13,14) parallele Achse (33) schwenkbar ist.

8. Wagen nach Anspruch 6 oder 7, wobei der Mitnehmer (46) oder dessen Gegenfläche (47) als elastischer Puffer ausgebildet ist.

9. Wagen nach einem der Ansprüche 4 bis 8, wobei jede Schale (13,14) in ihrer Kippstellung gegen einen Dämpfer (61) anschlägt.

10. Wagen nach einem der Ansprüche 4 bis 9, wobei die Kupplungsorgane (22) am Fahrgestell (23,24) benachbart der Ebene der Seitenführungsrollen (26) angebracht sind.

## Claims

1. Installation for sorting piece goods (10) comprising:
- a rail (3) closed to form a loop (2);
- a plurality of trucks (5) coupled together to form an endless chain of trucks (4) running on the rail (3), each having two dishes (13, 14) which are arranged one behind the other in the direction of travel and can pivot about an axis (28) extending in the longitudinal direction of the truck from a normal horizontal position in which they form a substantially continuous common supporting surface for the piece goods into a tipping position, each truck (5) having two actuating elements (38) for independent pivoting of the two dishes (13, 14) between the two positions;
- a drive (6) for driving the chain of trucks (4) along the rail (3);
- at least one loading station (9) along the loop (2) for loading the dishes (13, 14) with piece goods (10);
- a plurality of destination stations (11) along the loop (2) for receiving the piece goods (10), the destination stations (11) being at least as long in the conveying direction as the sum of the lengths of the two dishes (13, 14) of one truck (5);
- two switching elements (50, 51) associated with each destination station (11) which can be switched individually between an inactive state and an active state, wherein in the active state they actuate one of the two actuating elements (38) when a truck (5) goes past, the switching elements (50, 51) being at the same distance from one another as the actuating elements (38) of a truck (5);
- a control means (12) by means of which one of the destination stations (11) is assigned to the piece goods fed to the trucks (5) at the loading station (9), wherein the two switching elements (50, 51) of each destination station (11) can be controlled separately by the control means (12) in such a manner that either both, only one or none of the switching elements (50, 51) of this destination station (11) switch(es) into the active state when an individual truck (5) goes past so that both, only one or none of the dishes (13, 14) of a truck (5) tip(s) at this destination station (11), and
- at least one return element (54) along the loop (2) for returning the tipped dishes (13, 14) to the normal position.

2. Installation according to claim 1, the two actuating elements (38) of each truck (5) and the two switching elements (50, 51) of each destination station (11) comprising cooperating actuating rollers (44) and control cams (50, 51) at the same distance from one another.

3. Installation according to claim 1 or claim 2, the two actuating elements (38) of each truck being at a different distance from the vertical longitudinal centre plane of the truck and the two switching elements (50, 51) of each destination station (11) being at the same different distance from the vertical plane of symmetry of the rail (3) in the active state.

4. Transfer truck for use in a sorting installation according to claim 1, comprising:
- an underframe (23, 24) with rollers (25) and lateral guide rollers (26) for moving along a rail (3) of the installation (1);
- one coupling element (22) designed as a joint rod on either side of the underframe (23, 24) for connecting the truck (5) to adjacent trucks to form a chain of trucks (4);
- two dishes (23, 24) arranged one behind the other in the longitudinal direction of the truck and mounted on the underframe (23, 24) to pivot individually about an axis (28) extending in the longitudinal direction of the truck from a normal horizontal position in which they form a substantially continuous common supporting surface for the piece goods into a tipping position, and
- two actuating elements (38) for independent pivoting of the two dishes (13, 14) between the two positions.

5. Truck according to claim 4, each dish (13, 14) being locked in its normal position by a spring-loaded catch (34) which is released upon the first movement of the associated actuating element (38), and each dish (13, 14) being additionally centred relative to the underframe (23, 24) in the normal position by a resilient locking member (55).

6. Truck according to claim 5, each actuating element (38) comprising a lever (40) which can pivot about the pivot axis (28) of the dishes (13, 14) and is connected via a connecting rod (41) to an actuating element (43), the lever (40) having an inclined surface (45) for lifting the associated catch (34) and being provided at its free end with a driver (46) for pivoting the associated dish (13, 14), and the driver (46) being at a distance from the corresponding mating surface (47) of the dish (13, 14) in the normal position thereof.

7. Truck according to claim 6, the catch (34) in the normal position of the associated dish (13, 14) engaging in a locking notch (32) on a cylindrical outer surface of a disc (31) connected to this dish (13, 14) and the catch (34) being pivotable about an axis (33) parallel to the pivot axis (28) of the dish (13, 14).

8. Truck according to claim 6 or claim 7, the driver (46) or its mating surface (47) being in the form of an elastic buffer.

9. Truck according to one of claims 4 to 8, each dish (13, 14) bearing against a damper (61) in its tipping position.

10. Truck according to one of claims 4 to 9, the tipping elements (22) being mounted on the underframe (23, 24) adjacent to the plane of the lateral guide rollers (26).

## Revendications

1. Installation pour le triage de petites marchandises (10) comprenant :
- un rail (3) formant une boucle fermée (2) ;
- plusieurs chariots (5) accouplés entre eux de manière à former une chaîne de chariots sans fin (4) et guidés sur le rail (3), dont chacun d'eux présente deux coupes (13, 14) disposées l'une à la suite de l'autre dans le sens d'avancement et pouvant pivoter autour d'un axe (28) s'étendant dans la direction longitudinale des chariots, lesquelles peuvent pivoter d'une position initiale horizontale, dans laquelle elles forment une surface d'appui commune essentiellement ininterrompue pour les petites marchandises, dans une position basculée, sachant que chaque chariot (5) comporte deux organes d'actionnement (38) pour faire pivoter les deux coupes (13, 14) indépendamment l'une de l'autre entre les deux positions ;
- un dispositif d'entraînement (6) pour entraîner la chaîne de chariots (4) le long du rail (3) ;
- au moins un poste de chargement (9) le long de la boucle (2), pour charger de petites marchandises (10) sur les coupes (13, 14) ;
- plusieurs postes de destination (11) le long de la boucle (2) pour réceptionner les petites marchandises (10), les postes de destination (11) étant au moins aussi longs dans la direction d'avancement que la somme des longueurs des deux coupes (13, 14) d'un chariot (5) ;
- chaque fois deux organes de commande (50, 51) associés à chaque poste de destination (11), qui peuvent passer individuellement d'un état inactif à un état actif et inversement, sachant qu'à l'état actif, ils actionnent l'un des deux organes d'actionnement (38) lorsqu'un chariot (5) défile devant eux, et que les organes de commande (50, 51) présentent le même écartement que les organes d'actionnement (38) d'un chariot (5) ;
- un dispositif de commande (12) par le biais duquel chaque petite marchandise chargée sur les chariots (5) au niveau du poste de chargement (9) est associée à un poste de destination (11), les deux organes de commande (50, 51) de chaque poste de destination (11) pouvant être commandés séparément par le dispositif de commande (12) de telle manière que lors du passage d'un seul chariot (5), soit les deux organes de commande (50, 51) de ce poste de destination (11) passent simultanément à l'état actif, soit un seul ou aucun d'entre eux ne passe à l'état actif, de sorte que les deux coupes (13, 14) d'un chariot (5) ou une seule d'entre elles ou encore aucune d'entre elles ne bascule(nt) au niveau de ce poste de destination (11) ; et
- au moins un organe de rappel (54) le long de la boucle (2), pour ramener les coupes basculées (13, 14) à la position initiale.

2. Installation selon la revendication 1, dans laquelle les deux organes d'actionnement (38) de chaque chariot (5) et les deux organes de commande (50, 51) de chaque poste de destination (11) comprennent des galets d'actionnement (44) et des courbes de commande (50, 51) coopérant entre eux, qui présentent le même écartement.

3. Installation selon la revendication 1 ou 2, dans laquelle les deux organes d'actionnement (38) de chaque chariot présentent un écartement variable par rapport au plan médian longitudinal vertical du chariot, et les deux organes de commande (50, 51) de chaque station de destination (11) présentant à l'état actif le même écartement variable par rapport au plan de symétrie vertical du rail (3).

4. Chariot destiné à être mis en oeuvre dans une installation de triage selon la revendication 1, comprenant :
- un châssis (23, 24) muni de galets de roulement (25) et de galets de guidage latéraux (26), pour rouler sur un rail (3) de l'installation (1) ;
- de part et d'autre, chaque fois un organe d'accouplement (22) designé comme une barre à joint avec le châssis (23, 24), pour relier le chariot (5) au chariot adjacent de manière à forme une chaîne de chariot (4) ;
- deux coupes (13, 14) disposées l'une derrière l'autre dans la direction longitudinale du chariot et montées sur le châssis (23, 24) de manière à pouvoir pivoter individuellement autour d'un axe (28) s'étendant dans la direction longitudinale du chariot, qui peuvent pivoter d'une position initiale horizontale, dans laquelle elles forment une surface d'appui commune essentiellement ininterrompue pour les petites marchandises, dans une position basculée ; et
- deux organes d'actionnement (38) pour faire aller et venir les deux coupes (13, 14) de façon indépendante entre les deux positions.

5. Chariot selon la revendication 4, dans lequel chaque coupe (13, 14) est verrouillée dans sa position initiale par une lame (34) sollicitée par un ressort, qui est déverrouillée lors du premier mouvement de l'organe d'actionnement (38) qui y est associé, et chaque coupe (13, 14) étant en outre centrée dans la position initiale par rapport au châssis (23, 24) par un élément d'enclenchement faisant ressort (55).

6. Chariot selon la revendication 5, dans lequel chaque organe d'actionnement (38) comprend un levier (40) pouvant pivoter autour de l'axe de pivotement (28) des coupes (13, 14), lequel est relié à un élément d'actionnement (43) par l'intermédiaire d'une bielle (41), le levier (40) présentant une surface inclinée (45) pour soulever la lame (34) qui y est associée et, à son extrémité libre, un toc d'entraînement (46) pour faire pivoter la coupe qui y est associée (13, 14), et le toc d'entraînement (46) étant éloigné de la contre-surface (47) correspondante de la coupe (13, 14) lorsque celle-ci est dans la position initiale.

7. Chariot selon la revendication 6, dans lequel la lame (34) est en prise avec une encoche de verrouillage (32) dans une surface extérieure cylindrique d'un disque (31) relié à la coupe (13, 14) lorsque la coupe (13, 14) qui est associée à cette lame est dans la position initiale, et que la lame (34) peut pivoter autour d'un axe (33) parallèle à l'axe de pivotement (28) de la coupe (13, 14).

8. Chariot selon la revendication 6 ou 7, dans lequel le toc d'entraînement (46) ou sa contre-surface (47) est réalisé(e) en tant que butoir élastique.

9. Chariot selon l'une des revendications 4 à 8, dans lequel chaque coupe (13, 14) en position basculée se met en butée contre un amortisseur (61).

10. Chariot selon l'une des revendications 4 à 9, dans lequel les organes d'accouplement (22) sont fixés sur le châssis (23, 24) au voisinage du plan des galets de guidage latéraux (26).
